# EUROPEAN PATENT APPLICATION

(11) **EP 1 698 529 A1**
(43) Date of publication of application: **06.09.2006**
(21) Application number: 04771921.6
(22) Date of filing: 13.08.2004
(51) Int. Cl.: B60R 25/00, B60R 11/04, B60R 16/02

(54) **BIOLOGICAL AUTHENTICATION SYSTEM**

(30) Priority: 30.09.2003 JP 2003341218
(71) Applicant: MATSUSHITA ELECTRIC INDUSTRIAL CO., LTD., Kadoma-shi, Osaka 571-8501 (JP)
(72) Inventor: YUHARA, Masahiro Matsushita Electric Ind. Co, Ltd., Chuo-ku Osaka-shi Osaka 540-6319 (JP)
(74) Representative: Pautex Schneider, Nicole Véronique
(86) International application number: PCT/JP2004/011960
(87) International publication number: WO 2005/032895

(57) **Abstract**

Herein disclosed is a biometric identity verification apparatus, comprising: imaging means (**10**) for taking an image indicative of a person sitting on a specific seat of an automotive vehicle; biometric identity information obtaining means (**11**) for obtaining biometric identity information of the person sitting on the specific seat from the image taken by the imaging means (**10**); biometric identity information storing means (**12**) for storing biometric identity information of at least one user who is allowed to utilize the automotive vehicle; judging means (**13**) for verifying the biometric identity information obtained by the biometric identity information obtaining means (**11**) on the basis of the biometric identity information stored by the biometric identity information storing means (**12**) to judge whether or not the person sitting on the specific seat is identical to the user who is allowed to utilize the automotive vehicle; seat position information storing means (**14**) for storing position information indicative of a position of the specific seat with respect to the automotive vehicle; and seat shifting means (**15**) for shifting the specific seat to the position to be represented by the position information stored by the seat position information storing means (**14**) when the image indicative of the person sitting on the specific seat is taken by the imaging means (**10**).

## Description

### TECHNICAL FIELD OF THE INVENTION

The present invention relates to a biometric identity verification apparatus to be mounted on an automotive vehicle, and more particularly to a biometric identity verification apparatus for verifying biometric identity information obtained from one or more images of a person sitting on a driver's seat of an automotive vehicle to judge whether or not to allow the person sitting on a driver's seat as a registered user to drive the automotive vehicle on the basis of the verification of the biometric identity information.

### DESCRIPTION OF THE RELATED ART

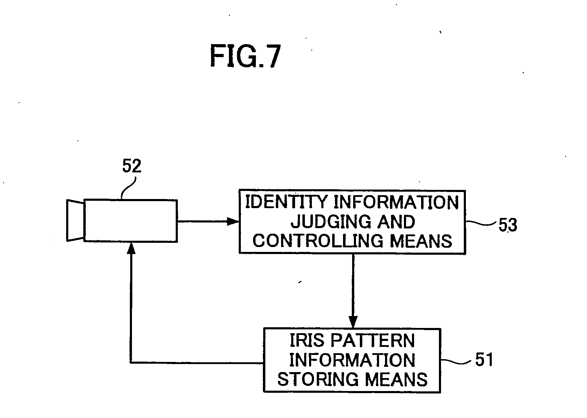

As one of conventional biometric identity verification apparatuses each to be mounted on an automotive vehicle, there has been known a biometric identity verification apparatus which is shown in FIG 7 as comprising iris pattern information storing means 51 for storing iris pattern information indicative of irises of one or more registered users, a camera unit 52 to be fixed at a position in the automotive vehicle to take an image indicative of one or two irises of a person sitting on a driver's seat of the automotive vehicle, identity judging and controlling means 53 for verifying iris pattern information obtained from the image taken by the camera unit 52 with the iris pattern information stored by the iris pattern information storing means 51 to judge whether or not to identify the person sitting on the driver's seat as one of the registered users on the basis of the verification of the iris pattern information. The conventional biometric identity verification apparatus is adapted to allow the camera unit 52 to take the image of the person sitting on the driver's seat without making the driver consciously assume a posture for the camera unit 52 (See Japanese Patent Laying-Open Publication No. 2000-168502).

The conventional biometric identity verification apparatus to be mounted on the automotive vehicle, however, encounters such a problem that the driver's seat is consciously shifted by the users to optimal positions depending on their own physical features when the automotive vehicle is utilized by each of the users. The driver's seat thus shifted frequently causes the camera unit 52 fixed at the position in the automotive vehicle to take no optimum image indicative of the person sitting on the driver's seat. With no optimum image, the biometric identity verification may be performed at a relatively low accuracy, or fail to be performed by the conventional biometric identity verification apparatus.

### DISCLOSURE OF THE INVENTION

It is, therefore, an object of the present invention to provide a biometric identity verification apparatus which can verify at a relatively high accuracy the biometric identity information obtained from the image of the person sitting on the driver's seat to reliably judge whether or not the person is identical to the user who is allowed to utilize the automotive vehicle even if the driver's seat is consciously shifted with respect to the automotive vehicle by the person sitting on the driver's seat.

In accordance with a first aspect of the present invention, there is provided a biometric identity verification apparatus, comprising: imaging means for taking an image indicative of a person sitting on a specific seat of an automotive vehicle; biometric identity information obtaining means for obtaining biometric identity information indicative of the person sitting on the specific seat from the image taken by the imaging means; biometric identity information storing means for storing biometric identity information of at least one user who is allowed to utilize the automotive vehicle; judging means for judging whether or not the person sitting on the specific seat is identical to the user who is allowed to utilize the automotive vehicle on the basis of the biometric identity information obtained by the biometric identity information obtaining means and the biometric identity information stored by the biometric identity information storing means; seat position information storing means for storing position information indicative of a position of the specific seat with respect to the automotive vehicle; and seat shifting means for shifting the specific seat to the position to be represented by the position information stored by the seat position information storing means when the image indicative of the person sitting on the specific seat is taken by the imaging means.

The biometric identity verification apparatus thus constructed as previously mentioned can judge at a relatively high reliability whether or not the person sitting on the specific seat is identical to the user who is allowed to utilize the automotive vehicle on the basis of the biometric identity information obtained from the image indicative of the person sitting on the specific seat without being affected by the changed position of the specific seat by reason that the specific seat is shifted to the position represented by the previously stored position information when the image indicative of the person sitting on the specific seat is taken by the imaging means.

The biometric identity verification apparatus according to the present invention may further comprise seat position information registering means for registering in the seat position information storing means the position information indicative of the current position of the specific seat with respect to the automotive vehicle.

The biometric identity verification apparatus thus constructed as previously mentioned can register the position information indicative of the position to be occupied by the specific seat with respect to the automotive vehicle, as an optimum position to be defined in association with the person sitting on the specific seat.

In the biometric identity verification apparatus according to the present invention, the imaging means may be operative to take an image indicative of the face of the person sitting on the specific seat.

The biometric identity verification apparatus thus constructed as previously mentioned can judge at a relatively high reliability whether or not the person sitting on the specific seat is identical to the user who is allowed to utilize the automotive vehicle on the basis of the biometric identity information obtained from the image indicative of the person sitting on the specific seat without being affected by the changed position of the specific seat by reason that the specific seat is shifted to the position represented by the previously stored position information when the image indicative of the person sitting on the specific seat is taken by the imaging means.

In the biometric identity verification apparatus according to the present invention, the imaging means may be operative to take an image indicative of one or two irises of the person sitting on the specific seat.

The biometric identity verification apparatus thus constructed as previously mentioned can judge at a relatively high reliability whether or not the person sitting on the specific seat is identical to the user who is allowed to utilize the automotive vehicle on the basis of the biometric identity information obtained from the image indicative of the person sitting on the specific seat without being affected by the changed position of the specific seat by reason that the specific seat is shifted to the position represented by the previously stored position information when the image indicative of the person sitting on the specific seat is taken by the imaging means.

The biometric identity verification apparatus according to the present invention may further comprise an in-vehicle apparatus immobilizing means to be operative in combination with at least one in-vehicle apparatus. The judging means may be operative to verify the biometric identity information obtained by the biometric identity information obtaining means to judge whether or not the person sitting on the specific seat is identical to the user who is allowed to utilize the in-vehicle apparatus. The in-vehicle apparatus immobilizing means may be operative to immobilize the in-vehicle apparatus to prevent the in-vehicle apparatus from being utilized by the person sitting on the specific seat when the judgment is made that the person sitting on the specific seat is not identical to the user who is allowed to utilize the in-vehicle apparatus.

The biometric identity verification apparatus thus constructed as previously mentioned can judge whether or not the person sitting on the specific seat is identical to the user who is allowed to utilize each of the in-vehicle apparatuses to selectively allow the in-vehicle apparatuses to be utilized by the person sitting on the specific seat, and to selectively prevent the in-vehicle apparatuses from being improperly utilized by the person sitting on the specific seat even if the automotive vehicle is borrowed from the user by the person.

In the biometric identity verification apparatus according to the present invention, the in-vehicle apparatus may be constituted by an engine activating apparatus for activating the engine of the automotive vehicle.

The biometric identity verification apparatus thus constructed as previously mentioned can prevent the automotive vehicle from being carelessly stolen by a suspicious person by reason that the in-vehicle apparatus immobilizing means is operative to immobilize the engine to prevent the automotive vehicle from being utilized by the person sitting on the specific seat when the judgment is made that the person sitting on the specific seat is not identical to the user who is allowed to utilize the in-vehicle apparatus.

In the biometric identity verification apparatus according to the present invention, the seat position information storing means may be operative to store seat-position-in-moving-vehicle information indicative of the position to be occupied in moving vehicle by the specific seat, to be defined with respect to the automotive vehicle, the position of the specific seat depending on the user who is allowed to utilize the automotive vehicle. The seat shifting means may be operative to shift the specific seat to the position represented by the seat-position-in-moving-vehicle information stored by the seat position information storing means when the judgment is made that the person sitting on the specific seat is identical to the user who is allowed to utilize the automotive vehicle.

The biometric identity verification apparatus thus constructed as previously mentioned can prevent a tedious task to shift the specific seat to the optimum position from being imposed on the person sitting on the specific seat when the judgment is made that the person sitting on the specific seat is identical to the user who is allowed to utilize the automotive vehicle.

The biometric identity verification apparatus according to the present invention may further comprise steering wheel shifting means for shifting the steering wheel of the automotive vehicle to a position to be within a predetermined range in position, or a direction to be within a predetermined range in direction.

The biometric identity verification apparatus thus constructed as previously mentioned can change the position and direction of the steering wheel to allow the image indicative of the person sitting on the specific seat to be taken by the imaging means without being interrupted by the steering wheel.

The biometric identity verification apparatus according to the present invention may further comprise steering wheel position judging means for judging whether or not the position of the steering wheel is within the predetermined range in position, or whether or not the direction of the steering wheel is within the predetermined range in direction. The steering wheel position adjusting means may be operative to shift the steering wheel of the automotive vehicle to the position to be within the predetermined range in position, or the direction to be within the predetermined range in direction when the judgment is made that the position of the steering wheel is not within the predetermined range in position, or the judgment is made that the direction of the steering wheel is not within the predetermined range in direction.

The biometric identity verification apparatus thus constructed as previously mentioned can change the position and direction of the steering wheel when the image indicative of the person sitting on the specific seat is taken by the imaging means.

In accordance with a second aspect of the present invention, there is provided an automotive vehicle to be provided with the above-mentioned biometric identity verification apparatus.

The automotive vehicle thus constructed as previously mentioned can easily establish the biometric identity verification of the person sitting on the specific seat. In other words, the biometric identity verification apparatus can improve its security level to prevent the automotive vehicle from being utilized, or stolen by a suspicious person.

### BRIEF DESCRIPTION OF THE DRAWINGS

The features and advantages of a biometric identity verification apparatus according to the present invention will be more clearly understood from the following description taken in conjunction with the accompanying drawings:
FIG **1** is a block diagram showing a first embodiment of the biometric identity verification apparatus according to the present invention;
FIG. **2** is a schematic view showing the first seat position to be occupied by the specific seat, and to be represented by the first seat position information in the biometric identity verification apparatus according to the present invention;
FIG **3** is schematic view showing the second seat position to be occupied by the specific seat, and to be represented by the second seat position information in the biometric identity verification apparatus according to the present invention;
FIG. **4** is a flowchart showing the operation of the first embodiment of the biometric identity verification apparatus according to the present invention;
FIG. **5** is a block diagram showing a second embodiment of the biometric identity verification apparatus according to the present invention;
FIGS. **6A** and **6B** are flowcharts collectively showing the operation of the second embodiment of the biometric identity verification apparatus according to the present invention; and
FIG. **7** is a block diagram showing a conventional biometric identity verification apparatus.

### DESCRIPTION OF THE PREFERRED EMBODIMENTS

The preferred embodiments of the biometric identity verification apparatus according to the present invention will be described hereinafter in accordance with accompanying drawings.

### [First embodiment]

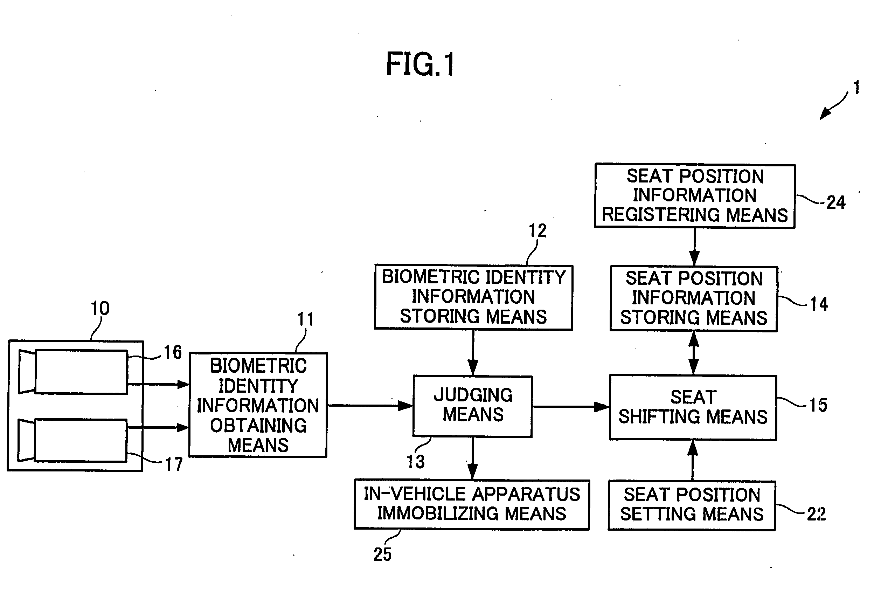

The constitution of the first embodiment of the biometric identity verification apparatus according to the present invention will be described hereinafter with reference to FIG. **1.**

The biometric identity verification apparatus **1** is shown in FIG **1** as comprising imaging means **10** for taking an image indicative of a person sitting on a specific seat such as a driver's seat **21** of an automotive vehicle, biometric identity information obtaining means **11** for obtaining biometric identity information of the person sitting on the driver's seat **21** from the image taken by the imaging means **10**, biometric identity information storing means **12** for storing biometric identity information of at least one user who is allowed to utilize the automotive vehicle, judging means **13** for verifying the biometric identity information obtained by the biometric identity information obtaining means **11** on the basis of the biometric identity information stored by the biometric identity information storing means **12** to judge whether or not the person sitting on the driver's seat **21** is identical to the user who is allowed to utilize the automotive vehicle, seat position information storing means **14** for storing position information indicative of a position of the driver's seat **21** with respect to the automotive vehicle, and seat shifting means **15** for shifting the driver's seat **21** to the position represented by the position information stored by the seat position information storing means 14 when the image indicative of the person sitting on the driver's seat **21** is taken by the imaging means **10.**

In this embodiment, the imaging means **10** includes a first camera unit **16** for taking an image indicative of the face of the person sitting on the driver's seat **21**, and a second camera unit **17** for taking an image indicative of one or two irises of the person sitting on the driver's seat **21**. The biometric identity information obtaining means **11** is operative to obtain, as biometric identity information, face information indicative of face of the person sitting on the driver's seat **21** from the image taken by the first camera unit **16,** and iris pattern information indicative of one or two irises of the person sitting on the driver's seat **21** from the image taken by the second camera unit **17**.

The biometric identity information storing means **12** is constituted by a nonvolatile memory having previously stored therein the face and iris pattern information of at least one user who is allowed to utilize the automotive vehicle, while the judging means **13** is operative to verify the face and iris pattern information obtained by the biometric identity information obtaining means **11** on the basis of the face and iris pattern information stored by the biometric identity information storing means **12** to judge whether or not the person sitting on the driver's seat **21** is identical to the user who is allowed to utilize the automotive vehicle.

The seat position information storing means **14** is constituted by a nonvolatile memory having previously stored therein three different seat position information including first seat position information indicative of a first seat position to be occupied by the driver's seat **21** when the image indicative of the face of the person sitting on the driver's seat **21** is taken by the first camera unit **16**, second seat position information indicative of a second seat position to be occupied by the driver's seat **21** when the image indicative of one or two irises of the person sitting on the driver's seat **21** is taken by the second camera unit **17**, and seat-position-in-moving-vehicle information indicative of a third seat position to be occupied by the driver's seat **21** when the automotive vehicle is moving, or the automotive vehicle is being driven by the person sitting on the driver's seat **21**.

Here, the seat position information storing means **14** is operative to store the seat-position-in-moving-vehicle information in one-to-one relationship with the user who is allowed to utilize the automotive vehicle. The seat position information storing means 14 may be constituted by memory media, which may further constitute the biometric identity information storing means **12**.

The seat shifting means **15** is operative to shift the driver's seat **21** to the first seat position to be represented by the first seat position information stored by the seat position information storing means **14** when the image indicative of the face of the person sitting on the driver's seat **21** is taken by the first camera unit **16**, to shift the driver's seat **21** to the second seat position to be represented by the second position information stored by the seat position information storing means **14** when the image indicative of one or two irises of the person sitting on the driver's seat **21** is taken by the second camera unit **17**, and to shift the driver's seat **21** to the third position to be represented by the seat-position-in-moving-vehicle information stored by the seat position information storing means **14** when the judgment is made by the judging means 13 that the person sitting on the driver's seat 21 is identical to the user who is allowed to utilize the automotive vehicle on the basis of the face and iris pattern information obtained by the biometric identity information obtaining means **11.**

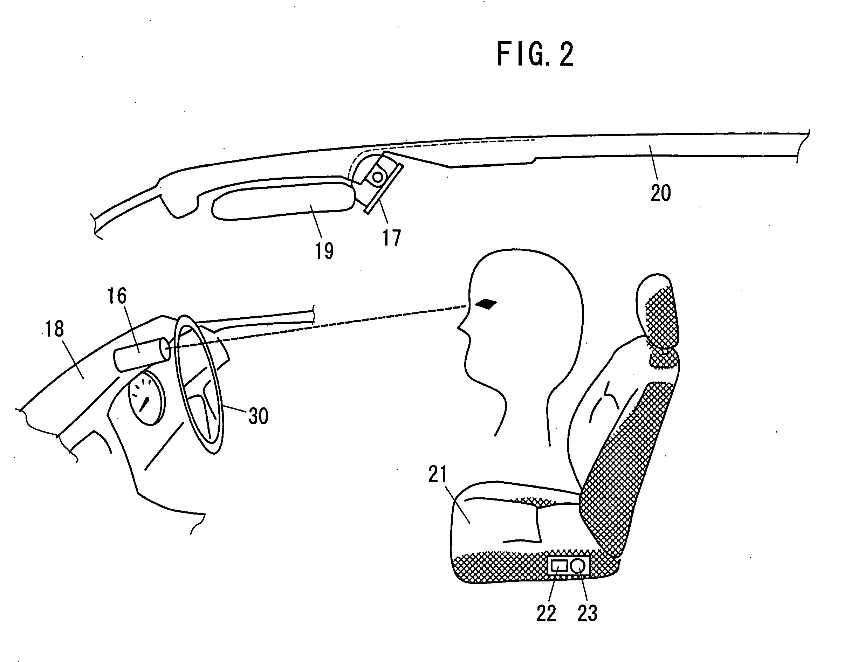

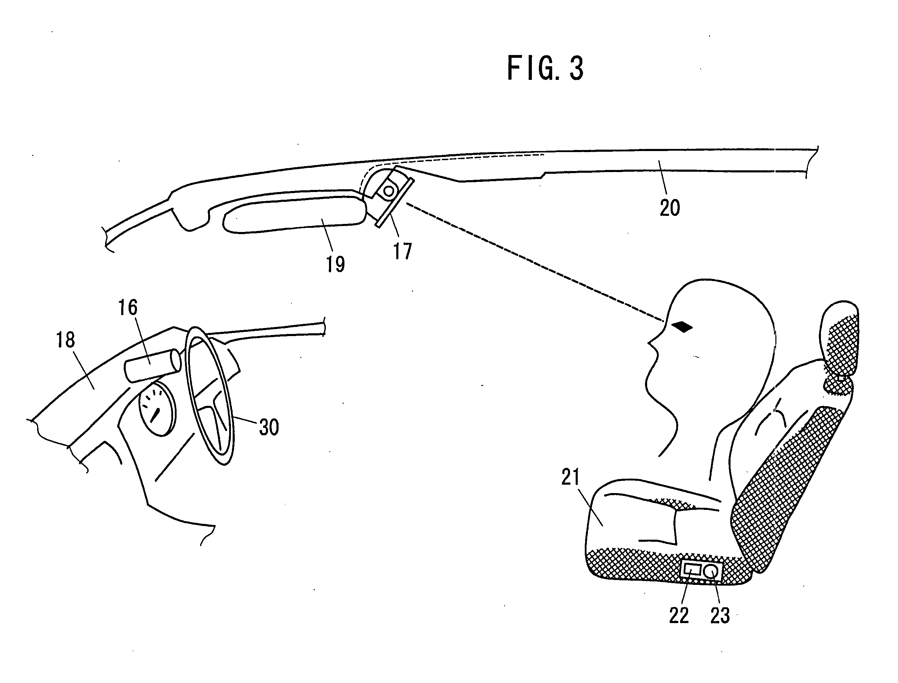

The schematic view of FIG. **2** shows the first seat position to be represented by the first seat position information. The schematic view of FIG. **3** shows the second seat position to be represented by the second seat position information.

As shown in FIGS. **2** and **3**, the first camera unit **16** is built in an instrument panel 18 of the automotive vehicle. The second camera unit **17** is fixed to the ceiling **20** of the automotive vehicle at the rear of a visor **19** of the automotive vehicle. The driver's seat **21** shifted to the first seat position to be represented by the first seat position information is close to a front section of the automotive vehicle in comparison with the driver's seat **21** shifted to the second seat position to be represented by the second seat position information.

As shown in FIGS. **1** and **3**, the biometric identity verification apparatus **1** further comprises seat position setting means **22** to be operated by the person sitting on the driver's seat **21** to allow the driver's seat **21** to be slidably moved with respect to the automotive vehicle, and start instruction issuing means for issuing a start instruction to the imaging means **10** to start to take an image indicative of the person sitting on the driver's seat **21**.

The seat position setting means **22** is fixed to the driver's seat **21**, while the seat shifting means **15** is operative to allow the driver's seat **21** to be slidably moved with respect to the automotive vehicle in the direction of rear section, or front section of the automotive vehicle in response to the operation of the seat position setting means **22**.

The start instruction issuing means includes a door sensor for detecting whether or not the driver side door of the automotive vehicle is properly shut, and a push button **23** to be located in the vicinity of the seat position setting means **22**. When the judgment is made that the push button **23** is pushed by the person sitting on the driver's seat **21** under the condition that the driver side door is properly shut, the start instruction issuing means is operative to issue a start instruction to the imaging means **10** to start to take an image indicative of the person sitting on the driver's seat **21.**

When the judgment is made by the judging means **13** that the person sitting on the driver's seat **21** is not identical to the user who is allowed to utilize the automotive vehicle, the judgment is made on whether or not the push button **23** is pushed again by the person sitting on the driver's seat **21**. When the judgment is made that the push button **23** is pushed again by the person sitting on the driver's seat **21**, the start instruction issuing means is operative to issue the start instruction to be outputted to the imaging means **10**.

The start instruction issuing means may further include an iris pattern verification start button (not shown) to be located in the vicinity of the second camera unit **17**, and to be operative to issue a start instruction to start with a process of verifying the iris pattern information of the person sitting on the driver's seat **21** on the basis of the iris pattern information stored by the seat biometric identity information storing means **12**.

As shown in FIG **1**, the biometric identity verification apparatus **1** further comprises seat position information registering means **24** for producing seat position information indicative of the current position of the driver's seat **21** with respect to the automotive vehicle to register the seat position information in the seat position information storing means **14**.

The seat position information registering means **24** will be more specifically described hereinafter. The seat position information registering means **24** is operative to assume a registration mode to register in the seat position information storing means **14** a first seat position information indicative of, as a first seat position, the current position to be occupied by the driver's seat **21** when the judgment is made by the judging means **13** that the face information obtained from the image taken by the first camera unit **16** is the same as the face information stored by the biometric identity information storing means **12**, and the second seat position information indicative of, as a second position, the current position to be occupied by the driver's seat **21** when the judgment is made by the judging means **13** that the iris pattern information obtained from the image taken by the second camera unit **17** is the same as the iris pattern information stored by the biometric identity information storing means **12**. When, for example, an ignition switch is turned on by the person sitting on the driver's seat **21**, the seat position information registering means **24** may be operative to assume the registration mode.

The biometric identity verification apparatus **1** further comprises in-vehicle apparatus immobilizing means **25** for immobilizing apparatuses each to be mounted on the automotive vehicle (hereinafter simply referred to as "in-vehicle apparatuses") to prevent each of the in-vehicle apparatuses from being utilized by the person sitting on the driver's seat **21** when the judgment is made that the person sitting on the driver's seat **21** is not identical to the user who is allowed to utilize the automotive vehicle. Here, the in-vehicle apparatuses includes an engine activating apparatus for allowing the engine to be activated, an in-vehicle telephone, an in-vehicle audio apparatus, a combination meter, an in-vehicle emergency apparatus, an in-vehicle communication apparatus for performing the communication with an electronic toll collection system, and a navigation apparatus.

Here, the face, iris pattern, and other biometric identity information of the user may be selectively registered in each of the in-vehicle apparatuses, while the judging means **13** may be operative to judge in each of the in-vehicle apparatuses whether or not the biometric identity information obtained from the image taken by the imaging means **10** is the same as the biometric identity information selectively registered in each of the in-vehicle apparatuses. The in-vehicle apparatus immobilizing means **25** may be operative to separately immobilize the in-vehicle apparatuses on the basis of the judgment of the judging means **13**.

In this embodiment, the in-vehicle apparatus is constituted by an engine activating apparatus which is operative to lock the in-vehicle apparatus or an ignition switch.

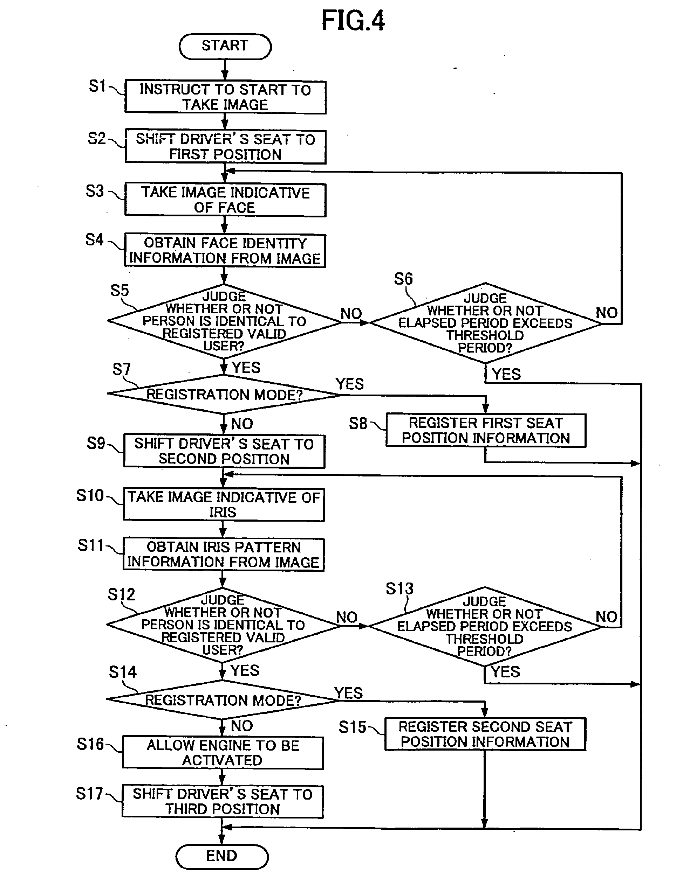

The operation of the biometric identity verification apparatus **1** according to the first embodiment of the present invention will be described hereinafter with reference to FIG **4**.

When the judgment is made that the push button **23** is pushed by the person sitting on the driver's seat **21** under the condition that the driver side door is properly shut, the start instruction to the imaging means **10** to take an image indicative of the person sitting on the driver's seat **21** is issued by the start instruction issuing means in the step **S1.** The driver's seat **21** is then shifted to the first seat position represented by the first seat position information stored by the seat position information storing means **14** in the step **S2**.

Here, the driver's seat **21** may be shifted by the seat shifting means **15** to the first seat position when the person sitting on the driver's seat **21** gets out of the automotive vehicle.

The image indicative of the face of the person sitting on the driver's seat **21** is then taken by the first camera unit **16** in response to the start instruction issued by the start instruction issuing means in the step **S3**. The face information indicative of the face of the person sitting on the driver's seat **21** is then obtained by the biometric identity information obtaining means **11** from the image taken by the first camera unit **16** in the step **S4**. The verification of the face information obtained by the biometric identity information obtaining means **11** is then performed by the judging means **13** on the basis of the face information stored by the biometric identity information storing means **12**. The judgment is then made by the judging means **13** in the step **S5** on whether or not the face information obtained by the biometric identity information obtaining means **11** is the same as the face information stored by the biometric identity information storing means **12**.

When the judgment is made in the step **S5** that the face information obtained by the biometric identity information obtaining means **11** is not the same as the face information stored by the biometric identity information storing means **12**, the judgment is made in the step S6 on whether or not the time period elapsing between a current time and a time when the image indicative of the face of the person sitting on the driver's seat **21** is taken by the first camera unit **16** exceeds a predetermined threshold value. When the judgment is made in the step **S6** that the time period exceeds the predetermined threshold value, the verification of the face information is completed by the biometric identity verification apparatus **1**. When, on the other hand, the judgment is made in the step **S6** that the time period does not exceed the predetermined threshold value, the step **S6** proceeds to the step **S3.** The operation of the verification of the face information is performed again by the biometric identity verification apparatus **1** through the steps **S3** to **S5.**

When, on the other hand, the judgment is made in the step **S5** that the face information obtained by the biometric identity information obtaining means **11** is the same as the face information stored by the biometric identity information storing means **12**, the judgment is then made in the step **S7** on whether or not the seat position information registering means **24** in the registration mode. When the judgment is made that the seat position information registering means **24** in the registration mode, the current position of the driver's seat **21** with respect to the automotive vehicle is registered as the first seat position information by the seat position information registering means **24**. From the above detail description, it will be understood that the first seat position information registered by the seat position information registering means **24** can represent a position at which the image indicative of the face of the person sitting on the driver's seat **21** is capable of being optimally taken by the imaging means **10**. This leads to the fact that the biometric identity verification apparatus **1** can perform at a relatively high accuracy the verification of the face information obtained from the image taken at the first seat position.

When, on the other hand, the judgment is made in the step **S7** that the seat position information registering means **24** is not in the registration mode, the driver's seat **21** is shifted by the seat shifting means **15** to the second seat position represented by the second seat position information stored by the seat position information storing means **14** in the step **S9**.

The image indicative of one or two irises of the person sitting on the driver's seat **21** is then taken by the second camera unit **17** in the step **S10**. The biometric identity information indicative of one or two irises of the person sitting on the driver's seat **21** is then obtained by the biometric identity information obtaining means **11** from the image taken by the second camera unit **17** in the step **S11.** The verification of the biometric identity information obtained by the biometric identity information obtaining means **11** is then performed by the judging means **13** on the basis of the biometric identity information stored by the biometric identity information storing means **12**. The judgment is made by the judging means **13** in the step **S12** on whether or not the iris pattern information obtained by the biometric identity information obtaining means **11** is the same as the iris pattern information stored by the biometric identity information storing means **12** on the basis of the verification of the biometric identity information.

When the judgment is made in the step **S12** that the iris pattern information obtained by the biometric identity information obtaining means 11 is not the same as the iris pattern information stored by the biometric identity information storing means **12,** the judgment is made in the step **S13** on whether or not the time period elapsing between a current time and a time when the image indicative of the face of the person sitting on the driver's seat **21** is taken by the second camera unit **17** exceeds the predetermined threshold value. When the judgment is made in the step **S13** that the time period exceeds the predetermined threshold value, the verification of the iris pattern information is completed by the biometric identity verification apparatus **1**. When, on the other hand, the time period does not exceed the predetermined threshold value, the step **S13** proceeds to the step **S10**. The verification of the iris pattern information is performed again by the biometric identity verification apparatus **1** through the steps **S10** to **S12**.

When, on the other hand, the judgment is made in the step **S12** that the iris pattern information obtained by the biometric identity information obtaining means **11** is the same as the iris pattern information stored by the biometric identity information storing means **12**, the judgment is made in the step **S14** on whether or not the time period elapsing between the current time and the time when the image indicative of one or two irises of the person sitting on the driver's seat **21** is taken by the second camera unit **17** exceeds the predetermined threshold value. When the judgment is made in the step **S14** that the time period exceeds the predetermined threshold value, the verification of the iris pattern information is completed by the biometric identity verification apparatus **1**. When, on the other hand, the time period does not exceed the predetermined threshold value, the step **S6** proceeds to the step **S10**. The verification of the iris pattern information is performed again by the biometric identity verification apparatus **1** through the steps **S10** to **S12.**

When, on the other hand, the judgment is made in the step S14 that the seat position information registering means **24** is not in the registration mode, the in-vehicle apparatus immobilizing means **25** allows the engine activating apparatus to assume a state to operable to activate the engine in the step **S16**. The driver's seat **21** is then shifted by the seat shifting means **15** to the position to be represented by the seat-position-in-moving-vehicle information stored by the seat position information storing means 14 in the step **S17.**

When the first seat position information is not registered in the seat position information storing means **14**, the position of the driver's seat **21** may be shifted in the step **S2** to a position which was occupied by the driver's seat **21** when the image indicative of the face of the person sitting on the driver's seat **21** was taken by the imaging means **10** in last use, the judgment being made by the identity information judging means **13** that the face information obtained from the image indicative of the face of the person sitting on the driver's seat **21** is the same as the face information stored by the biometric identity information storing means **12**. The position of the driver's seat **21** may be shifted to a predetermined position when the image indicative of the face of the person sitting on the driver's seat **21** is taken for the first time by the imaging means **10.**

When the first seat position information is not registered in the seat position information storing means **14**, the position of the driver's seat **21** may be shifted in the step S9 to a position which was occupied by the driver's seat **21** when the image indicative of one or two irises of the person sitting on the driver's seat **21** was taken by the imaging means **10** in last use, the judgment being made by the identity information judging means **13** that the iris pattern information obtained from the image indicative of one or two irises of the person sitting on the driver's seat **21** is the same as the iris pattern information stored by the biometric identity information storing means **12**. The driver's seat **21** may be shifted to a predetermined position when the image indicative of one or two irises of the person sitting on the driver's seat **21** is taken for the first time by the imaging means **10**.

When the image indicative of the person sitting on the driver's seat **21** is taken by the imaging means **10** of the above mentioned biometric identity verification apparatus **1** according to the present invention, the face of the person sitting on the driver's seat **21** may be illuminated by an interior lamp such as for example a map lamp mounted on the automotive vehicle.

The information about the verification and judgment of the judging means **13**, or the guidance to be provided at a time when the driver's seat **21** is being shifted by the seat shifting means **15** may be displayed, as image or character, on a screen of a liquid crystal display device mounted on the automotive vehicle, or outputted as a sound through a speaker unit of an audio apparatus mounted on the automotive vehicle.

The constitutional elements of the biometric identity verification apparatus **1** according to the first embodiment of the present invention may be realized by a central processing unit (CPU) which is operative to execute a program indicative of the above mentioned operation of the biometric identity verification apparatus **1**. More specifically, the biometric identity information obtaining means **11**, the judging means **13**, the seat shifting means **15**, the seat position information registering means **24**, and the in-vehicle apparatus immobilizing means **25** may be collectively constituted by the CPU.

From the above detail description, it will be understood that the biometric identity verification apparatus **1** according to the first embodiment of the present invention can verify at a relatively high accuracy the biometric identity information of the person sitting on the driver's seat **21** by reason that the seat shifting means **15** is operative to shift the driver's seat **21** to the position represented by the position information previously stored by the seat position information storing means **14** when the image indicative of the person sitting on the driver's seat **21** of the automotive vehicle is taken by the imaging means **10.**

When the judgment is made that the person sitting on the driver's seat **21** is identical to the registered user through the steps of shifting the driver's seat **21** to the first seat position to allow the image indicative of the face of the person sitting on the driver's seat **21** to be optimally taken by the imaging means **10** before judging that the face identity information obtained from the image taken at the first seat position is the same as the stored face identity information, shifting the driver's seat **21** to the second position to allow the image indicative of one or two irises of the person sitting on the driver's seat **21** to be optimally taken by the imaging means **10** before judging that the iris identity information obtained from the image taken at the second position is the same as the stored iris identity information, the biometric identity verification apparatus **1** according to the first embodiment of the present invention is operative to allow the automotive vehicle to be utilized by the person sitting on the driver's seat **21**. When the judgment is made that the obtained face identity information is the same as the stored face identity information, or the judgment is made that the obtained iris identity information is the same as the stored iris identity information, the biometric identity verification apparatus may be operative to allow the in-vehicle apparatus to be utilized by the person sitting on the driver's seat **21**. When, for example, an iris pattern verification start button is pushed by the person sitting on the driver's seat **21** in the biometric identity verification apparatus which is operative to sequentially perform the face and iris pattern information verifications, the driver's seat **21** may be shifted to the seat position to be represented by the second seat position information lastly stored by the seat position information storing means **14**, or a predetermined seat position before the iris pattern information of the person sitting on driver's seat **21** is performed by the judging means **13**.

The in-vehicle apparatuses may be previously prioritized by the biometric identity verification apparatus **1** according to the present invention, while the judging means **13** may be operative to judge whether or not to allow the relatively high prioritized in-vehicle apparatus, such as for example an audio apparatus, to be utilized by the person sitting on the driver's seat **21** on the basis of the verification of the face information, and to judge whether or not to allow the relatively low prioritized in-vehicle apparatus, such as for example an engine, to be utilized by the person sitting on the driver's seat **21** on the basis of the verification of the iris pattern information.

The operation modes of the in-vehicle apparatus may be previously prioritized by the biometric identity verification apparatus 1 according to the present invention, while the judging means **13** may be operative to judge whether or not to allow the in-vehicle apparatus to perform in the relatively high prioritized operation mode, such as for example a previously set radio mode, on the basis of the verification of the face information, and to judge whether or not to allow the in-vehicle apparatus to perform in the relatively low prioritized operation mode, such as for example a switching mode to switch from a radio to a compact disc, on the basis of the verification of the iris pattern information.

### [Second embodiment]

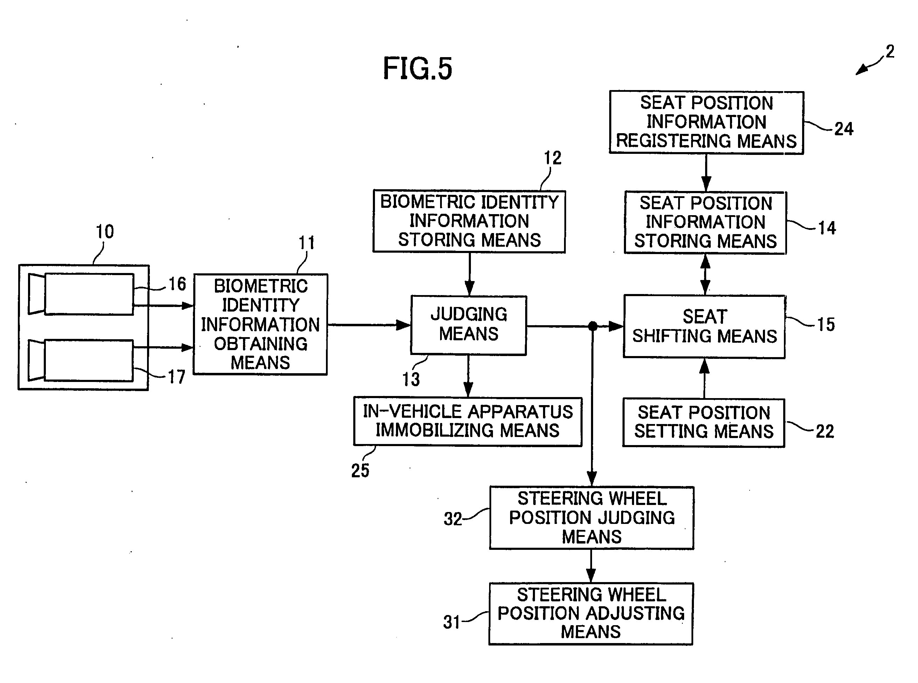

The second embodiment of the biometric identity verification apparatus according to the present invention will be described hereinafter with reference to FIG 5. The constitutional elements of the second embodiment of the biometric identity verification apparatus according to the present invention are entirely the same as those of the first embodiment of the biometric identity verification apparatus according to the present invention except for the constitutional elements appearing in the following description. Therefore, only the constitutional elements of the second embodiment of the biometric identity verification apparatus different from those of the first embodiment of the biometric identity verification apparatus will be described in detail hereinafter. The constitutional elements of the second embodiment of the biometric identity verification apparatus entirely the same as those of the first embodiment of the biometric identity verification apparatus will not be described but bear the same reference numerals and legends as those of the first embodiment of the biometric identity verification apparatus.

As shown in FIG. **5,** the biometric identity verification apparatus **2** further comprises, in addition to the constitutional elements of the first embodiment of the biometric identity verification apparatus 1 according to the present invention, steering wheel position adjusting means **31** for adjusting the position of the steering wheel **30** to ensure that the position of the steering wheel **30** is within a predetermined range, or to ensure that the direction of the steering wheel **30** is within a predetermined range, and steering wheel position judging means **32** for judging whether or not the position of the steering wheel **30** is within the predetermined range, or whether or not the direction of the steering wheel **30** is within the predetermined range.

The term "predetermined range" is intended to indicate a range in which the image indicative of the person sitting on the driver's seat **21** is taken by the imaging means **10** without being interrupted by the steering wheel **30**.

The steering wheel position adjusting means **31** is constituted by at least two constitutional elements including a driving motor for driving the steering wheel **30** to shift the position of the steering wheel 30, and the above-mentioned CPU. When the judgment is made that the position of the steering wheel **30** is not within the predetermined range, the steering wheel position adjusting means **31** is operative to shift the position of the steering wheel **30** to ensure that the position of the steering wheel **30** is within the predetermined range.

The steering wheel position judging means **32** is constituted by at least two constitutional elements including a sensor for detecting the position of the steering wheel **30,** and the above-mentioned CPU.

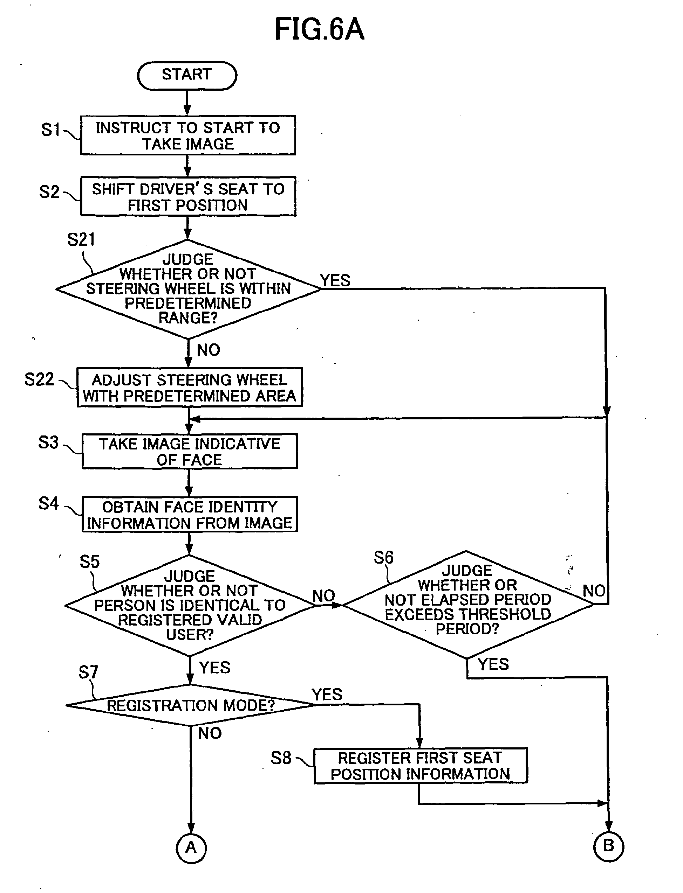

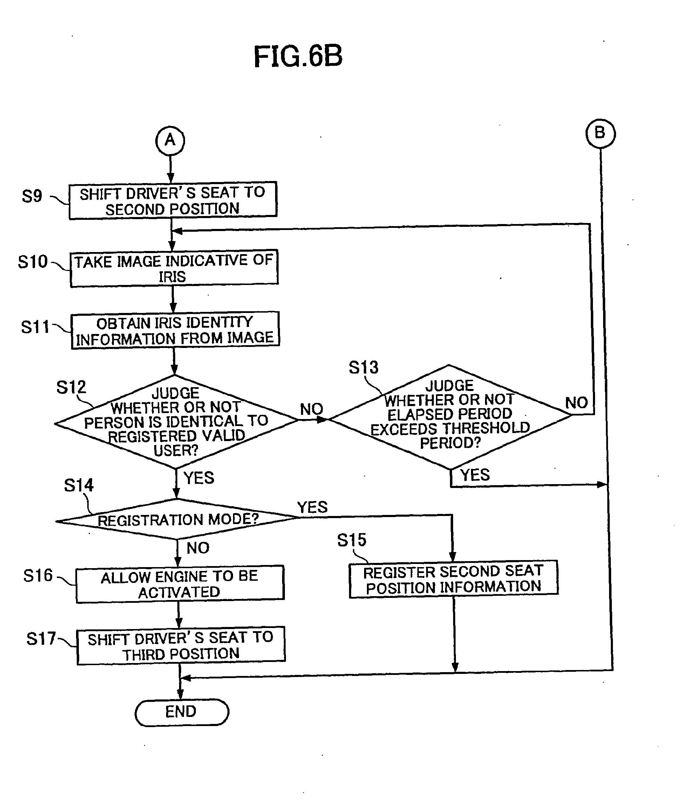

The operation of the second embodiment of the biometric identity verification apparatus according to the present invention will be described hereinafter with reference to FIGS. **6A** and **6B**. The steps of the second embodiment of the biometric identity verification apparatus according to the present invention are entirely the same as those of the first embodiment of the biometric identity verification apparatus according to the present invention as shown in FIGS. **6A** and **6B** except for the steps appearing in the following description. Therefore, only the steps of the second embodiment of the biometric identity verification apparatus different from those of the first embodiment of the biometric identity verification apparatus will be described in detail hereinafter. The steps of the second embodiment of the biometric identity verification apparatus entirely the same as those of the first embodiment of the biometric identity verification apparatus will not be described but bear the same reference numerals and legends as those of the first embodiment of the biometric identity verification apparatus.

When the image indicative of the driver's face of the person sitting on the driver's seat **21** is taken by the first camera unit **16** in the step **S3**, the judgment is made by the steering wheel position judging means **32** in the step **S21** on whether or not the position of the steering wheel **30** is within the predetermined range.

When the judgment is made in the step **S21** that the position of the steering wheel **30** is not within the predetermined range, the position of the steering wheel **30** is adjusted by the steering wheel position adjusting means **31** in the step **S22**. As a result of the fact that the operation in the step **S22** is performed by the steering wheel position adjusting means **31**, the position of the steering wheel **30** is within the predetermined range.

In case that the position of the steering wheel **30** is adjusted by the steering wheel position adjusting means **31**, the adjusted position of the steering wheel **30** may be moved back to its original position after the judgment is made in the step **S5** that the face information obtained from the image indicative of the face of the person sitting on the driver's seat **21** is the same as the face information stored by the biometric identity information storing means **12.**

From the above detail description, it will be understood that the biometric identity verification apparatus **2** can allow the image indicative of the person sitting on the driver's seat **21** to be taken by the imaging means **10** without being interrupted by the steering wheel **30** by reason that the steering wheel position adjusting means **31** is operative to adjust the position of the steering wheel **30** to ensure that the position of the steering wheel **30** is within the predetermined range.

In this embodiment, the steering wheel position adjusting means **31** is operative to adjust the position of the steering wheel **30** to ensure that the position of the steering wheel **30** is within the predetermined range. However, the steering wheel position adjusting means **31** may be operative to adjust the direction of the steering wheel **30** to ensure that the position of the steering wheel **30** is within a predetermined range.

### INDUSTRIAL APPLICABILITY OF THE PRESENT INVENTION

As will be seen from the foregoing detail description, the biometric identity verification apparatus according to the present invention can judge at a relatively high reliability, as an object to be solved, whether or not the person sitting on the driver's seat is identical to the user who is allowed to utilize the automotive vehicle without being affected by the position of the driver's seat with respect to the automotive vehicle, even if the position of the driver's seat is arbitrarily changed by the person sitting on the driver's seat, by reason that the seat shifting means is operative to shift the specific seat to the position to be represented by the position information stored by the seat position information storing means when the image indicative of the person sitting on the specific seat is taken by the imaging means. The biometric identity verification apparatus according to the present invention is useful for an apparatus to be mounted on the automotive vehicle, and to be operative to judge whether or not to allow the automotive vehicle to be utilized by the person sitting on the driver's seat.

## Claims

1. A biometric identity verification apparatus, comprising:
imaging means for taking an image indicative of a person sitting on a specific seat of an automotive vehicle;
biometric identity information obtaining means for obtaining biometric identity information indicative of said person sitting on said specific seat from said image taken by said imaging means;
biometric identity information storing means for storing biometric identity information of at least one user who is allowed to utilize said automotive vehicle;
judging means for judging whether or not said person sitting on said specific seat is identical to said user who is allowed to utilize said automotive vehicle on the basis of said biometric identity information obtained by said biometric identity information obtaining means and said biometric identity information stored by said biometric identity information storing means;
seat position information storing means for storing position information indicative of a position of said specific seat with respect to said automotive vehicle; and
seat shifting means for shifting said specific seat to said position to be represented by said position information stored by said seat position information storing means when said image indicative of said person sitting on said specific seat is taken by said imaging means.

2. A biometric identity verification apparatus as set forth in claim 1, which further comprises seat position information registering means for registering in said seat position information storing means said position information indicative of the current position of said specific seat with respect to said automotive vehicle.

3. A biometric identity verification apparatus as set forth in claim 1, in which said imaging means is operative to take an image indicative of the face of said person sitting on said specific seat.

4. A biometric identity verification apparatus as set forth in claim 1, in which said imaging means is operative to take an image indicative of one or two irises of said person sitting on said specific seat.

5. A biometric identity verification apparatus as set forth in claim 1, which further comprises an in-vehicle apparatus immobilizing means to be operative in combination with at least one in-vehicle apparatus, in which said judging means is operative to judge whether or not said person sitting on said specific seat is identical to said user who is allowed to utilize said in-vehicle apparatus, and in which said in-vehicle apparatus immobilizing means is operative to immobilize said in-vehicle apparatus to prevent said in-vehicle apparatus from being utilized by said person sitting on said specific seat when the judgment is made that said person sitting on said specific seat is not identical to said user who is allowed to utilize said in-vehicle apparatus.

6. A biometric identity verification apparatus as set forth in claim 5, in which said in-vehicle apparatus is constituted by an engine activating apparatus for activating the engine of said automotive vehicle.

7. A biometric identity verification apparatus as set forth in claim 1, in which said seat position information storing means is operative to store seat-position-in-moving-vehicle information indicative of said position to be occupied in moving vehicle by said specific seat, to be defined with respect to said automotive vehicle, said position of said specific seat depending on said user who is allowed to utilize said automotive vehicle, and in which said seat shifting means is operative to shift said specific seat to said position represented by said seat-position-in-moving-vehicle information stored by said seat position information storing means when the judgment is made that said person sitting on said specific seat is identical to said user who is allowed to utilize said automotive vehicle.

8. A biometric identity verification apparatus as set forth in claim 1, which further comprises steering wheel shifting means for shifting the steering wheel of said automotive vehicle to a position to be within a predetermined range in position, or a direction to be within a predetermined range in direction.

9. A biometric identity verification apparatus as set forth in claim 1, which further comprises steering wheel position judging means for judging whether or not said position of said steering wheel is within said predetermined range in position, or whether or not said direction of said steering wheel is within said predetermined range in direction, and in which said steering wheel position adjusting means is operative to shift the steering wheel of said automotive vehicle to said position to be within said predetermined range in position, or said direction to be within said predetermined range in direction when the judgment is made that said position of said steering wheel is not within said predetermined range in position, or the judgment is made that said direction of said steering wheel is not within said predetermined range in direction.

10. An automotive vehicle comprising a biometric identity verification apparatus as set forth in claim 1.

## Amended claims

### Amended claims under Art. 19.1 PCT

1. A biometric identity verification apparatus, comprising:
imaging means for taking an image indicative of a person sitting on a specific seat of an automotive vehicle;
biometric identity information obtaining means for obtaining biometric identity information indicative of said person sitting on said specific seat from said image taken by said imaging means;
biometric identity information storing means for storing biometric identity information of at least one user who is allowed to utilize said automotive vehicle;
judging means for verifying said biometric identity information obtained by said biometric identity information obtaining means on the basis of said biometric identity information stored by said biometric identity information storing means to judge whether or not said person sitting on said specific seat is identical to said user who is allowed to utilize said automotive vehicle;
seat position information storing means for storing position information indicative of a position of said specific seat with respect to said automotive vehicle; and
steering wheel shifting means for shifting the steering wheel of said automotive vehicle to a position to be within a predetermined range in position, or a direction to be within a predetermined range in direction.

2. A biometric identity verification apparatus as set forth in claim 1, which further comprises seat position information registering means for registering in said seat position information storing means said position information indicative of the current position of said specific seat with respect to said automotive vehicle.

3. A biometric identity verification apparatus as set forth in claim 1, in which said imaging means is operative to take an image indicative of the face of said person sitting on said specific seat.

4. A biometric identity verification apparatus as set forth in claim 1, in which said imaging means is operative to take an image indicative of one or two irises of said person sitting on said specific seat.

5. A biometric identity verification apparatus as set forth in claim 1, which further comprises an in-vehicle apparatus immobilizing means to be operative in combination with at least one in-vehicle apparatus, in which said judging means is operative to verify said biometric identity information obtained by said biometric identity information obtaining means to judge whether or not said person sitting on said specific seat is identical to said user who is allowed to utilize said in-vehicle apparatus, and in which said in-vehicle apparatus immobilizing means is operative to immobilize said in-vehicle apparatus to prevent said in-vehicle apparatus from being utilized by said person sitting on said specific seat when the judgment is made that said person sitting on said specific seat is not identical to said user who is allowed to utilize said in-vehicle apparatus.

6. A biometric identity verification apparatus as set forth in claim 5, in which said in-vehicle apparatus is constituted by an engine activating apparatus for activating the engine of said automotive vehicle.

7. A biometric identity verification apparatus as set forth in claim 1, in which said seat position information storing means is operative to store seat-position-in-moving-vehicle information indicative of said position to be occupied in moving vehicle by said specific seat, to be defined with respect to said automotive vehicle, said position of said specific seat depending on said user who is allowed to utilize said automotive vehicle, and in which said seat shifting means is operative to shift said specific seat to said position represented by said seat-position-in-moving-vehicle information stored by said seat position information storing means when the judgment is made that said person sitting on said specific seat is identical to said user who is allowed to utilize said automotive vehicle.

8. A biometric identity verification apparatus as set forth in claim 1, which further comprises steering wheel position judging means for judging whether or not said position of said steering wheel is within said predetermined range in position, or whether or not said direction of said steering wheel is within said predetermined range in direction, and in which said steering wheel position adjusting means is operative to shift the steering wheel of said automotive vehicle to said position to be within said predetermined range in position, or said direction to be within said predetermined range in direction when the judgment is made that said position of said steering wheel is not within said predetermined range in position, or the judgment is made that said direction of said steering wheel is not within said predetermined range in direction.

9. An automotive vehicle comprising a biometric identity verification apparatus as set forth in claim 1.
